# EUROPEAN PATENT APPLICATION

(11) **EP 4 383 250 A1**
(43) Date of publication of application: **12.06.2024**
(21) Application number: 22851586.2
(22) Date of filing: 23.03.2022
(51) Int. Cl.: G10L 15/22, G10L 15/06, G10L 15/26, H04L 12/28

(54) **WAKE-UP METHOD, APPARATUS, DEVICE, AND COMPUTER STORAGE MEDIUM**

(30) Priority: 06.08.2021 CN 202110904169
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: CHEN, Baiyang, Foshan, Guangdong 528311 (CN); CHEN, Yirong, Foshan, Guangdong 528311 (CN); HUO, Weiming, Foshan, Guangdong 528311 (CN)
(74) Representative: Ran, Handong
(86) International application number: PCT/CN2022/082571
(87) International publication number: WO 2023/010861

(57) **Abstract**

A wake-up method, an apparatus, a device, and a computer storage medium, which are used in a voice device. The method comprises: obtaining audio to be identified (S101); utilizing a wake-up model and at least two groups of training data to separately perform processing on the audio to be identified, and obtaining at least two confidence scores and a confidence score threshold corresponding to each score (S 102), wherein the at least two groups of training data are obtained by separately performing training on at least two wake-up word training sets by means of the wake-up model; and triggering a wake-up event of the voice device according to a comparison result between the at least two confidence scores and the confidence score threshold corresponding to each score (S 103).

## Description

### CROSS-REFERENCE TO RELATED APPLICATIONS

This application claims priority to Chinese patent application No. 202110904169.X, titled "WAKE-UP PROCESSING METHOD AND DEVICE, APPARATUS, AND COMPUTER STORAGE MEDIUM" and filed on August 6, 2021, the entire contents of which are incorporated herein by reference.

### FIELD

The present disclosure relates to the field of speech recognition technologies, and more particularly, to a wake-up processing method and device, an apparatus, and a computer storage medium.

### BACKGROUND

With the development of speech recognition technology, smart home has become a trend, and voice apparatuses are gradually involved in people's daily lives. At present, many users generally have a variety of categories of voice apparatuses at home. A wake-up operation needs to be performed on each voice apparatus before voice control of the voice apparatus.

However, in the related art, these voice apparatuses commonly encounter situations where a plurality of wake-up words need to be recognized. When these different wake-up words are used simultaneously for training, crosstalk is likely to occur between these different wake-up words, which in turn leads to a problem of false wake-ups. Consequently, a rate of false wake-ups in speech recognition is increased.

### SUMMARY

The present disclosure provides a wake-up processing method and device, an apparatus, and a computer storage medium, which can avoid a possibility of crosstalk between different wake-up words that occurs when the different wake-up words are used simultaneously for training, reducing a rate of false wake-ups of a voice apparatus.

To achieve the above objectives, technical solutions of the present disclosure are implemented as follows.

In a first aspect, an embodiment of the present disclosure provides a wake-up processing method, applied in a voice apparatus. The method includes: obtaining to-be-recognized audio; processing the to-be-recognized audio using a wake-up model and at least two groups of training data separately, to obtain at least two confidence levels and respective confidence level thresholds corresponding to the at least two confidence levels, the at least two groups of training data being obtained by separately training with at least two groups of wake-up word training sets using the wake-up model; and triggering a wake-up event of the voice apparatus based on a comparison result between the at least two confidence levels and the respective confidence level thresholds corresponding to the at least two confidence levels.

In some embodiments, said obtaining the to-be-recognized audio includes: performing a data collection through a sound collection device to obtain initial voice data; and pre-processing the initial voice data to obtain the to-be-recognized audio.

In some embodiments, each of the at least two groups of training data includes a model parameter and a confidence level threshold. Said processing the to-be-recognized audio using the wake-up model and the at least two groups of training data separately, to obtain the at least two confidence levels and the respective confidence level thresholds corresponding to the at least two confidence levels includes: processing the to-be-recognized audio using the wake-up model and the model parameters in the at least two groups of training data separately to obtain the at least two confidence levels, and obtaining the respective confidence level thresholds corresponding to the at least two confidence levels from the at least two groups of training data.

In some embodiments, the at least two groups of training data include a first group of training data and a second group of training data, the first group of training data including a first model parameter and a first confidence level threshold, and the second group of training data including a second model parameter and a second confidence level threshold. Said processing the to-be-recognized audio using the wake-up model and the at least two groups of training data separately, to obtain the at least two confidence levels and the respective confidence level thresholds corresponding to the at least two confidence levels includes: processing the to-be-recognized audio using the wake-up model and the first model parameter in the first group of training data to obtain a first confidence level, and determining the first confidence level threshold corresponding to the first confidence level from the first group of training data; and processing the to-be-recognized audio using the wake-up model and the second model parameter in the second group of training data to obtain a second confidence level, and determining the second confidence level threshold corresponding to the second confidence level from the second group of training data.

In some embodiments, said triggering the wake-up event of the voice apparatus based on the comparison result between the at least two confidence levels and the respective confidence level thresholds corresponding to the at least two confidence levels includes: triggering the wake-up event of the voice apparatus when the first confidence level is greater than or equal to the first confidence level threshold or the second confidence level is greater than or equal to the second confidence level threshold.

In some embodiments, the wake-up event includes a first wake-up event and/or a second wake-up event, the first wake-up event having an association relation with a wake-up word corresponding to the first group of training data, and the second wake-up event having an association relation with a wake-up word corresponding to the second group of training data.

In some embodiments, said triggering the wake-up event of the voice apparatus based on the comparison result between the at least two confidence levels and the respective confidence level thresholds corresponding to the at least two confidence levels includes: triggering the first wake-up event of the voice apparatus when the first confidence level is greater than or equal to the first confidence level threshold and the second confidence level is smaller than the second confidence level threshold; or triggering the second wake-up event of the voice apparatus when the second confidence level is greater than or equal to the second confidence level threshold and the first confidence level is smaller than the first confidence level threshold; or calculating, when the first confidence level is greater than or equal to the first confidence level threshold and the second confidence level is greater than or equal to the second confidence level threshold, a first value by which the first confidence level exceeds the first confidence level threshold and a second value by which the second confidence level exceeds the second confidence level threshold, and triggering a target wake-up event of the voice apparatus based on the first value and the second value.

In some embodiments, said triggering the target wake-up event of the voice apparatus based on the first value and the second value includes: when the first value is greater than or equal to the second value, determining the target wake-up event as the first wake-up event and triggering the first wake-up event; or when the first value is smaller than the second value, determining the target wake-up event as the second wake-up event and triggering the second wake-up event.

In some embodiments, the method further includes: obtaining the at least two groups of wake-up word training sets; and training the wake-up model using the at least two groups of wake-up word training sets, to obtain the at least two groups of training data. Each of the at least two groups of training data includes a model parameter and a confidence level threshold.

In some embodiments, said obtaining the at least two groups of wake-up word training sets includes: obtaining an initial training set, the initial training set including at least two wake-up words; and grouping the initial training set based on different wake-up words to obtain the at least two groups of wake-up word training sets.

In a second aspect, an embodiment of the present disclosure provides a wake-up processing device, applied in a voice apparatus. The wake-up processing device inludes: an obtaining unit configured to obtain to-be-recognized audio; a processing unit configured to process the to-be-recognized audio using a wake-up model and at least two groups of training data separately, to obtain at least two confidence levels and respective confidence level thresholds corresponding to the at least two confidence levels, the at least two groups of training data being obtained by separately training with at least two groups of wake-up word training sets using the wake-up model; and a trigger unit configured to trigger a wake-up event of the voice apparatus based on a comparison result between the at least two confidence levels and the respective confidence level thresholds corresponding to the at least two confidence levels.

In a third aspect, an embodiment of the present disclosure provides a voice apparatus. The voice apparatus includes a memory and a processor. The memory is configured to store a computer program executable on the processor. The processor is configured to perform, when executing the computer program, the method according to any embodiment in the first aspect.

In a fourth aspect, an embodiment of the present disclosure provides a computer storage medium having a computer program stored thereon. The computer program, when executed by at least one processor, implements the method according to any embodiment in the first aspect.

The embodiments of the present disclosure provide a wake-up processing method and device, an apparatus, and a computer storage medium. The to-be-recognized audio is obtained. The to-be-recognized audio is processed using the wake-up model and the at least two groups of training data separately, to obtain the at least two confidence levels and the respective confidence level thresholds corresponding to the at least two confidence levels. The at least two groups of training data are obtained by separately training with at least two groups of wake-up word training sets using the wake-up model. The to-be-woken-up apparatus is determined based on the comparison result between the at least two confidence levels and the respective confidence level thresholds corresponding to the at least two confidence levels. In this way, by training with a plurality of wake-up words separately using one wake-up model, a possibility of crosstalk between the plurality of wake-up words is avoided, and a satisfactory recognition result can be achieved with a small training volume. In addition, separation and non-interference of training data for the wake-up words are realized, and thus a development efficiency can be improved. Further, the rate of false wake-ups of the voice apparatus can be reduced for a case where the plurality of wake-up words is recognized simultaneously.

### BRIEF DESCRIPTION OF THE DRAWINGS

FIG. 1 is a flowchart illustrating a wake-up processing method according to an embodiment of the present disclosure.
FIG. 2 is a flowchart illustrating another wake-up processing method according to an embodiment of the present disclosure.
FIG. 3 is a schematic diagram showing a training process of a wake-up model according to an embodiment of the present disclosure.
FIG. 4 is a detailed flowchart illustrating a wake-up processing method according to an embodiment of the present disclosure.
FIG. 5 is a schematic diagram showing a composition structure of a wake-up processing device according to an embodiment of the present disclosure.
FIG. 6 is a schematic diagram showing a specific hardware structure of a voice apparatus according to an embodiment of the present disclosure.

### DETAILED DESCRIPTION OF THE EMBODIMENTS

Technical solutions according to embodiments of the present disclosure will be described clearly and completely below in combination with accompanying drawings of the embodiments of the present disclosure. It should be understood that the embodiments described below are merely intended to explain, rather than limit, the present disclosure. Further, it should be understood that for ease of description, only portions relevant to the present disclosure in question are shown in the accompanying drawings.

Unless otherwise defined, all technical and scientific terms used herein have the same meaning as commonly understood by those skilled in the art of the present disclosure. Terms in the present disclosure herein are only used for the purpose of describing embodiments of the present disclosure, and are not intended to limit the present disclosure.

In the following description, "some embodiments" describes a subset of all possible embodiments. However, it should be understood that "some embodiments" may be the same subset or different subsets of all possible embodiments and can be combined with each other without conflict.

It should be noted that terms "first/second/third" mentioned in the embodiments of the present disclosure are used only to distinguish between similar objects, rather than implying a particular sequence of the objects. It should be understood that the terms "first/second/third" may be interchanged in a particular order or sequence where permitted, to enable the embodiments of the present disclosure described herein to be implemented in an order other than that illustrated or described herein.

In practical applications, two speech recognition schemes are available for a wake-up model at present. Scheme (1): a plurality of wake-up words is trained in a same model. Scheme (2): a plurality of models is used to train wake-up words separately.

However, for scheme (1), since the plurality of wake-up words is trained in the same model, crosstalk is likely to occur between different wake-up words due to similarity between the wake-up words. Considering a rate corresponding to wake-ups and a storage space, a training set cannot be too large, resulting in likely misrecognition of voice between different wake-up words. Therefore, false wake-ups are likely to occur, which cause complaints. For scheme (2), model loading takes time, and model switching leads to a serious delay, failing to realize a scheme of recognizing a plurality of wake-up words simultaneously. In short, in the related art, voice apparatuses commonly encounter situations where a plurality of wake-up words need to be recognized. When these wake-up words are used simultaneously for training, crosstalk is likely to occur between these wake-up words, which in turn leads to a problem of false wake-ups. Consequently, a rate of false wake-ups in speech recognition is increased.

On this basis, the embodiments of the present disclosure provide a wake-up processing method. The basic concept of the method is as follows. To-be-recognized audio is obtained. The to-be-recognized audio is processed using a wake-up model and at least two groups of training data separately, to obtain at least two confidence levels and respective confidence level thresholds corresponding to the at least two confidence levels. The at least two groups of training data are obtained by separately training with at least two groups of wake-up word training sets using the wake-up model. A to-be-woken-up apparatus is determined based on a comparison result between the at least two confidence levels and the respective confidence level thresholds corresponding to the at least two confidence levels. In this way, by training with a plurality of wake-up words separately using one wake-up model, a possibility of crosstalk between the plurality of wake-up words is avoided, and a satisfactory recognition result can be achieved with a small training volume. In addition, separation and non-interference of training data for the wake-up words are realized, and thus a development efficiency can be improved. Further, a rate of false wake-ups of the voice apparatus can be reduced for a case where the plurality of wake-up words is recognized simultaneously.

Embodiments of the present disclosure will be described in detail below with reference to the accompanying drawings.

### First Embodiment

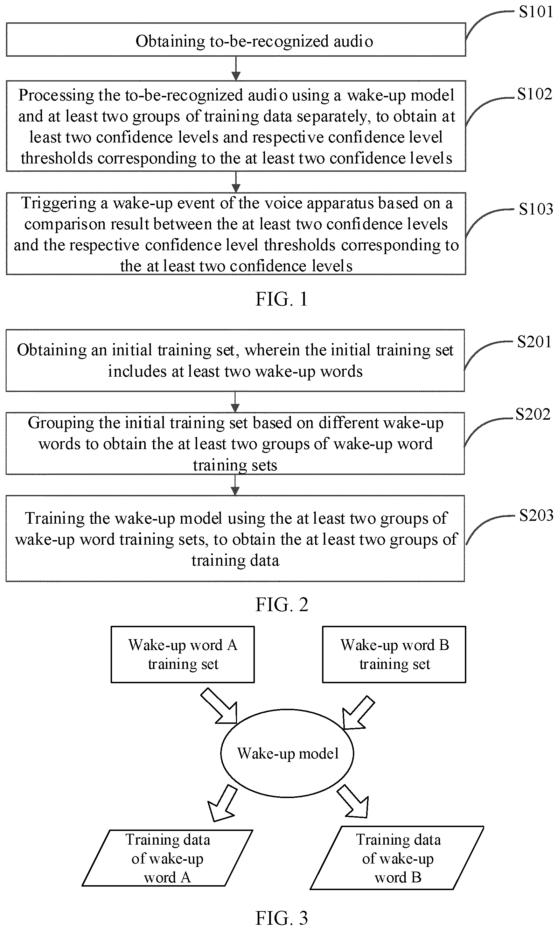

FIG. 1 illustrates a flowchart illustrating a wake-up processing method according to an embodiment of the present disclosure. As illustrated in FIG. 1, the method may include following steps.

At S101, to-be-recognized audio is obtained.

It should be noted that the wake-up processing method of the embodiment of the present disclosure is applied in a wake-up processing device or a voice apparatus integrated with the wake-up processing device. The voice apparatus can be configured to interact with a user by voice and is any to-be-woken-up apparatus that needs to be woken up by voice, such as a voice air conditioner, a voice water heater, a voice rice cooker, a voice microwave oven, and any other common home appliances. The present disclosure is not limited to any of these examples.

It should also be noted that since the voice apparatus can be configured to interact with the user by voice, a data collection can also be performed in this case through a sound collection device. Therefore, in some embodiments, that "to-be-recognized audio is obtained" at S 101 may include: performing a data collection through a sound collection device to obtain initial voice data; and pre-processing the initial voice data to obtain the to-be-recognized audio.

In the embodiments of the present disclosure, the sound collection device may be an audio collector such as a microphone. In an exemplary embodiment of the present disclosure, initial voice data from the user may be obtained through a real-time data collection of a microphone. Then, the initial voice data is pre-processed to obtain to-be-recognized audio.

It should be understood that the initial voice data in the embodiment of the present disclosure includes sound information of the user. Since no wake-up recognition is involved in a case where only environmental sound is available, such a case is out of discussion in the embodiment of the present disclosure, and thus details thereof will be omitted here. That is, the initial voice data may be made by the user, e.g., "Xiaomei Xiaomei". A pre-processing is performed on the sound information when the voice apparatus obtains the sound information.

The pre-processing may include two aspects including an endpoint detection process and a pre-emphasis process, which will be described in detail below.

In a possible embodiment, the endpoint detection process refers to finding a start point of instruction audio and an end point of the instruction audio. Several consecutive frames of sound fragments may be extracted from the sound information. Some of the consecutive frames of sound fragments located in the front of a sequence of the several consecutive frames of sound fragments are determined as the to-be-recognized audio. A specific quantity of frames determined as the to-be-recognized audio may be determined based on a length set for wake-up words. For example, a specific length of time is pre-set based on a quantity of words in the wake-up words. Sound fragments in the length of time are determined as the to-be-recognized audio. The specific length of time can be adjusted as desired. The embodiment is not limited in this regard.

In another embodiment, the quantity of frames for the to-be-processed audio may be determined based on a length of null data detected between two consecutive sound fragments. For example, in practice, the user may say the wake-up word first, and then say the rest of a voice instruction after a pause of several seconds. A fragment before the null data may be determined as the to-be-recognized audio.

As an example, the voice apparatus is described as a voice air conditioner. On a basis of the above embodiments, assuming that a piece of audio "Xiaomei Xiaomei" is received by the voice air conditioner through the sound collection device, and wake-up words "Xiaomei Xiaomei" have a predetermined length of time of two seconds, frames corresponding to the first two seconds should be extracted as the to-be-processed audio in the endpoint detection process. Or, assuming that a silence gap exists between two sentences of a piece of audio "Xiaomei Xiaomei, turn up the temperature" received by the voice air conditioner through the sound collection device and that audio information during the silence gap is null data, frames before the null data of the silence gap may be determined as the to-be-processed audio.

In another possible embodiment, the pre-emphasis process refers to emphasizing a high-frequency portion of the audio to increase resolution of a high-frequency portion of audio. When the sound information is obtained, environmental sound information and audio information are extracted from the sound information using audio recognition, to eliminate interference from noises and increase the resolution of the high-frequency portion. Therefore, clear human sound information is obtained.

It should be noted that according to the embodiments of the present disclosure, the to-be-recognized audio carrying the environmental sound may also be used for wake-up model training with noise. In an exemplary embodiment of the present disclosure, subsequent to an extraction of the environmental sound information from the to-be-recognized audio, the environmental sound information may be transmitted to a server as training data. A sound pressure level of the environmental sound information may be used as a feature parameter in further training of the wake-up model. Since the wake-up model is trained with noise, corresponding parameters can be adjusted based on magnitudes of different environmental sound information during recognition of the wake-up model. For example, a corresponding confidence level threshold can be adjusted. In this way, the wake-up model can be applied in different usage scenarios.

At S 102, the to-be-recognized audio is processed using a wake-up model and at least two groups of training data separately, to obtain at least two confidence levels and respective confidence level thresholds corresponding to the at least two confidence levels.

In the embodiment of the present disclosure, the at least two groups of training data are obtained by separately training with at least two groups of wake-up word training sets using the wake-up model. Each group of training data may include a model parameter and a confidence level threshold (the confidence level threshold may also be referred to as a "wake-up threshold").

Accordingly, in some embodiments, that "the to-be-recognized audio is processed using a wake-up model and at least two groups of training data separately, to obtain at least two confidence levels and respective confidence level thresholds corresponding to the at least two confidence levels" at S102 may include: processing the to-be-recognized audio using the wake-up model and the model parameters in the at least two groups of training data separately to obtain the at least two confidence levels, and obtaining the respective confidence level thresholds corresponding to the at least two confidence levels from the at least two groups of training data.

It should be noted that the at least two groups of wake-up word training sets are obtained through performing grouping based on different wake-up words. That is, each wake-up word corresponds to one group of wake-up word training set. Further, the at least two groups of training data are obtained by separately training with the at least two groups of wake-up word training sets using the wake-up model. That is, a correspondence exists between training data and wake-up words. Each of the at least two groups of training data corresponds to one wake-up word. For example, if there are wake-up word A and wake-up word B, one group of wake-up word A training set and one group of wake-up word B training set may be obtained, and then training the wake-up model to obtain training data for wake-up word A and training data for wake-up word B.

In this way, for a process of processing the to-be-recognized audio, the to-be-recognized audio may be recognized by training with data corresponding to at least two wake-up words separately, and a confidence level obtained for the to-be-processed audio under the model parameter of each group of training data may be obtained. It should be noted that unlike the related art in which different wake-up words are used simultaneously for training, in this embodiment, different wake-up words are processed individually in a recognition process and a training process. Therefore, no crosstalk occurs between different wake-up words in a recognition result, which reduces the rate of false wake-ups during use of the voice apparatus. In addition, performing training and recognition by individual wake-up words greatly reduces operation pressure of a processor. Further, response time is shortened, which optimizes use experience of the user.

As an example, the voice apparatus is described as the voice air conditioner. Assuming that the to-be-recognized audio "Xiaomei Xiaomei" is received by the voice air conditioner, a confidence level corresponding to each of at least two wake-up words (e.g., "Xiaomei Xiaomei" and "Hello Xiaomei") is determined by the wake-up model in conjunction with training data corresponding to the at least two wake-up words. The confidence level corresponding to each of the two wake-up words "Xiaomei Xiaomei, Hello Xiaomei" is obtained.

It should be understood that the voice apparatus may have a built-in speech recognition module configured to recognize the to-be-processed audio. In other embodiments of the present disclosure, the voice apparatus may be communicatively connected to the server, in such a manner that speech recognition is performed through the server and a specific result is fed back to the voice apparatus as an input, which can prevent crosstalk between the wake-up words for voice apparatuses. A specific implementation can be adjusted as desired. It should also be understood that the wake-up word may be any pre-set text. The embodiments are not limited in this regard.

In addition, according to the embodiments of the present disclosure, prior to separately processing the to-be-recognized audio using the wake-up model and the at least two groups of training data, a text conversion processing may be performed on the to-be-recognized audio to obtain audio text information. Then, the audio text information is processed for matching by means of text matching or semantic matching to determine at least one keyword or key character. The at least one keyword or key character is then processed separately using the wake-up model and the at least two groups of training data. Details thereof will be omitted here.

In addition, in the embodiments of the present disclosure, the wake-up model and the confidence level threshold may be pre-set in the voice apparatus in a form of factory setting. Therefore, the voice apparatus can have an initial wake-up model and an initial confidence level threshold when first powered on, and be trained and updated during subsequent use to make it more compatible with usage scenarios of the user. The present disclosure is not limited in this regard.

Further, hypothetically, the at least two groups of training data include two groups of training data. In this case, the at least two groups of training data may include a first group of training data and a second group of training data. The first group of training data includes a first model parameter and a first confidence level threshold. The second group of training data includes a second model parameter and a second confidence level threshold.

Correspondingly, in some embodiments, that "the to-be-recognized audio is processed using a wake-up model and at least two groups of training data separately, to obtain at least two confidence levels and respective confidence level thresholds corresponding to the at least two confidence levels" may include: processing the to-be-recognized audio using the wake-up model and the first model parameter in the first group of training data to obtain a first confidence level, and determining the first confidence level threshold corresponding to the first confidence level from the first group of training data; and processing the to-be-recognized audio using the wake-up model and the second model parameter in the second group of training data to obtain a second confidence level, and determining the second confidence level threshold corresponding to the second confidence level from the second group of training data.

That is, hypothetically, wake-up word A and wake-up word B are available. Subsequent to obtaining training data of wake-up word A and training data of wake-up word B, the to-be-recognized audio may be processed using the wake-up model and the training data of wake-up word A to obtain a confidence level of wake-up word A and a confidence level threshold corresponding to wake-up word A and processed using the wake-up model and the training data of wake-up word B to obtain a confidence level of wake-up word B and a confidence level threshold corresponding to wake-up word B. Therefore, respective confidence levels and respective confidence level thresholds of the two groups of training data can be obtained to facilitate a subsequent determination of a to-be-triggered wake-up event through a comparison.

At S103, a wake-up event of the voice apparatus is triggered based on a comparison result between the at least two confidence levels and the respective confidence level thresholds corresponding to the at least two confidence levels.

It should be noted that subsequent to obtaining the at least two confidence levels and the respective confidence level thresholds corresponding to the at least two confidence levels, the at least two confidence levels may be compared with the respective confidence level thresholds corresponding to the at least two confidence levels. Then, the wake-up event of the voice apparatus is triggered based on the comparison result.

In an exemplary embodiment of the present disclosure, as an example, two wake-up words are available. In this case, the at least two confidence levels include only the first confidence level and the second confidence level. In some embodiments, that "a wake-up event of the voice apparatus is triggered based on a comparison result between the at least two confidence levels and the respective confidence level thresholds corresponding to the at least two confidence levels" at S103 may include: triggering the wake-up event of the voice apparatus when the first confidence level is greater than or equal to the first confidence level threshold or the second confidence level is greater than or equal to the second confidence level threshold.

In the embodiments of the present disclosure, the wake-up event may include a first wake-up event and/or a second wake-up event. The first wake-up event has an association relation with a wake-up word corresponding to the first group of training data. The second wake-up event has an association relation with a wake-up word corresponding to the second group of training data.

In some embodiments, when the at least two confidence levels include the first confidence level and the second confidence level, that "a wake-up event of the voice apparatus is triggered based on a comparison result between the at least two confidence levels and the respective confidence level thresholds corresponding to the at least two confidence levels" may further include: triggering the first wake-up event of the voice apparatus when the first confidence level is greater than or equal to the first confidence level threshold and the second confidence level is smaller than the second confidence level threshold; or triggering the second wake-up event of the voice apparatus when the second confidence level is greater than or equal to the second confidence level threshold and the first confidence level is smaller than the first confidence level threshold; or calculating, when the first confidence level is greater than or equal to the first confidence level threshold and the second confidence level is greater than or equal to the second confidence level threshold, a first value by which the first confidence level exceeds the first confidence level threshold and a second value by which the second confidence level exceeds the second confidence level threshold, and triggering a target wake-up event of the voice apparatus based on the first value and the second value.

It should be noted that for a case where both the first confidence level and the second confidence level are greater than or equal to respective confidence level thresholds corresponding to the first confidence level and the second confidence level, the first value by which the first confidence level exceeds the first confidence level threshold and the second value by which the second confidence level exceeds the second confidence level threshold need to be calculated. In some embodiments, that "triggering a target wake-up event of the voice apparatus based on the first value and the second value" may include: when the first value is greater than or equal to the second value, determining the target wake-up event as the first wake-up event and triggering the first wake-up event; or when the first value is smaller than the second value, determining the target wake-up event as the second wake-up event and triggering the second wake-up event.

For example, when to-be-processed audio "Assistant Xiaomei" is received by the sound collection device of the to-be-woken-up apparatus, a confidence level corresponding to "Xiaomei Xiaomei" and a confidence level corresponding to "Assistant Xiaomei" are obtained by the wake-up model based on training data corresponding to the wake-up word "Xiaomei Xiaomei" and training data corresponding to the wake-up word "Assistant Xiaomei" and compared with their respective confidence level thresholds. When the confidence level of "Xiaomei Xiaomei" is greater than or equal to the confidence level threshold corresponding to "Xiaomei Xiaomei", a wake-up event corresponding to "Xiaomei Xiaomei" is the target wake-up event. Otherwise, when the confidence level of "Assistant Xiaomei" is greater than or equal to the confidence level threshold corresponding to "Assistant Xiaomei", a wake-up event corresponding to "Assistant Xiaomei" is the target wake-up event.

It should be noted that, in special cases, when the confidence level of "Xiaomei Xiaomei" and the confidence level of "Assistant Xiaomei" are greater than or equal to their respective confidence level thresholds, a value by which each confidence level exceeds its respective confidence level threshold can be obtained through a comparison. In the two wake-up words, the wake-up event corresponding to the wake-up word having the confidence level exceeding the confidence level threshold by a greater value is the target wake-up event. In this way, when the target wake-up event is determined, the target wake-up event can be executed by the voice apparatus to perform a corresponding wake-up operation.

It should also be noted that different wake-up words, such as wake-up words with different pronunciations and a same meaning, can generate a same wake-up instruction. Waking up a corresponding wake-up event with the same wake-up instruction can be applied in both a wake-up process of a single voice apparatus with different wake-up words and a cascaded central voice control system composed of a plurality of voice apparatuses. A choice can be made as desired in the embodiments of the present disclosure. The present disclosure is not limited in this regard.

The embodiments of the present disclosure provide a voice processing method applied in the voice apparatus. The to-be-recognized audio is obtained. The to-be-recognized audio is processed using the wake-up model and the at least two groups of training data separately, to obtain the at least two confidence levels and the respective confidence level thresholds corresponding to the at least two confidence levels. The at least two groups of training data are obtained by separately training with the at least two groups of wake-up word training sets using the wake-up model. The wake-up event of the voice apparatus is triggered based on the comparison result between the at least two confidence levels and the respective confidence level thresholds corresponding to the at least two confidence levels. In this way, by training with the plurality of wake-up words separately using one wake-up model, the possibility of crosstalk between the plurality of wake-up words is avoided, and the satisfactory recognition result can be achieved with a small training volume. In addition, separation and non-interference of training data for the wake-up words are realized, and thus the development efficiency can be improved. Further, the rate of false wake-ups of the voice apparatus can be reduced in the case where the plurality of wake-up words is recognized simultaneously.

### Second Embodiment

Reference can be made to FIG. 2, which is based on the same concept as the above-mentioned embodiments and illustrates a flowchart illustrating another wake-up processing method according to an embodiment of the present disclosure. As illustrated in FIG. 2, the method can include following steps.

At S201, an initial training set is obtained. The initial training set includes at least two wake-up words.

At S202, the initial training set is grouped based on different wake-up words to obtain the at least two groups of wake-up word training sets.

At S203, the wake-up model is trained using the at least two groups of wake-up word training sets, to obtain the at least two groups of training data,

It should be noted that in the embodiments of the present disclosure, the wake-up model may be a neural network model. A Neural Network (NN), which is a complex network system formed by a large number of simple processing units (referred to as "neurons") extensively connected to each other, reflects many basic features of the human brain function and is a highly complex nonlinear dynamical learning system. With massively parallel, distributed storage and processing, self-organization, self-adaptation, and self-learning capabilities, the neural network is particularly suitable for dealing with imprecise and ambiguous information processing problems that require consideration of many factors and conditions. The wake-up model may be a Deep Neural Network (DNN) model. In an exemplary embodiment of the present disclosure, the wake-up model may include a structural design of the DNN and a mathematical model of each neuron.

It should be noted that in the embodiments of the present disclosure, each group of training data may at least include the model parameter and the confidence level threshold. In an exemplary embodiment of the present disclosure, the training data may include an optimal parameter (referred to as the "model parameter") obtained after training in the DNN, the confidence level threshold, or the like.

It should also be noted that, according to the embodiments of the present disclosure, the wake-up model is trained separately using different wake-up words to obtain training data corresponding to the different wake-up words. Therefore, a manner of separation and non-interference of data for the wake-up words is realized. In addition, for a multi-model solution, several models are adopted for separate training. During later use, due to time needed to load the wake-up model, a switching process can lead to a serious delay in recognition. However, different from the multi-model solution, the technical solutions provided by the embodiments of the present disclosure allow that different wake-up words are used to train a same wake-up model. Therefore, a problem of the delay during the wake-up processing is mitigated.

It should also be noted that different wake-up words are used as criteria for grouping and dividing training sets. In addition, training sets corresponding to different wake-up words are used for training individually, and data obtained is stored independently, such that the model can be trained with a limited number of training sets. Further, a technical effect of no crosstalk between wake-up words is achieved. The solutions according to the embodiments of the present disclosure, which are different from the case where the wake-up model is trained with wake-up words simultaneously, can avoid the crosstalk between wake-up words.

Further, in some embodiments, the method can further include, when a new wake-up word needs to be added: training the wake-up model based on a group of wake-up word training sets corresponding to the new wake-up word to obtain a new group of training data.

That is, since data separation is realized in the embodiments of the present disclosure, retraining only needs to be performed on the newly added wake-up word without affecting existing wake-up words. Therefore, in a case where the new wake-up word needs to be added, the development efficiency can also be improved.

In other words, in a case where the new wake-up word needs to be added, even the wake model that has already been put into use can be trained using the new wake-up word in accordance with the training method in the above-mentioned embodiments. The wake-up model that has already been put into use, as the wake-up model in the above solution, is trained in this way continuously. Further, since the wake-up model keeps learning new wake-up words, the product can be continuously updated to satisfy new needs of the user.

As an example, wake-up word A and wake-up word B are available. FIG. 3 illustrates a schematic diagram showing a training process of a wake-up model according to an embodiment of the present disclosure. FIG. 3 illustrates two groups of wake-up word training sets, e.g., a wake-up word A training set and a wake-up word B training set. Training data of wake-up word A may be obtained through training the wake-up model using the wake-up word A training set. Training data of wake-up word B may be obtained through training the wake-up model using the wake-up word B training set.

In particular, according to the embodiment of the present disclosure, training one wake-up model using two wake-up word training sets may obtain two groups of training data. The input initial training set is divided into different groups based on different wake-up words. Individual groups of wake-up word training sets are separately used as input data in turn to train the wake-up model, until training of all the wake-up word training sets is finished. In addition, it should be noted that training data obtained from training the wake-up model with each group of wake-up word training sets is partitioned and stored based on different wake-up words.

For example, the wake-up word training sets are partitioned by different wake-up words, which may be wake-up words having completely different semantic meanings or wake-up words having a same semantic meaning but in different dialectal contexts, e.g., xiumei xiumei (wake-up word "Xiaomei Xiaomei" in Cantonese) and xiaomei xiaomei (wake-up word "Xiaomei Xiaomei" in Mandarin). In this way, when the wake-up model is used for a recognition processing, one piece of output information may be obtained when several pieces of input information are inputted. The input information is the to-be-processed audio. The wake-up model may have a built-in speech recognition module, through which the to-be-recognized audio may be recognized to output the wake-up event corresponding to the to-be-recognized audio. Or, the voice apparatus may be set up with a speech recognition module, through which the to-be-recognized audio is obtained from the sound information, and speech recognition is performed on the to-be-recognized audio to output the wake-up event corresponding to the to-be-recognized audio. In the embodiments of the present disclosure, a specific way of information input can be chosen as desired. The present disclosure is not limited in this regard.

The embodiment of the present disclosure provides the voice processing method applied in the voice apparatus. The at least two groups of wake-up word training sets are obtained. The wake-up model is trained using the at least two groups of wake-up word training sets, to obtain the at least two groups of training data. Each of the at least two groups of training data includes the model parameter and the confidence level threshold. In this way, the possibility of crosstalk between different wake-up words that occurs when the different wake-up words are used simultaneously for training can be avoided. Wake-up words are separated from each other, and so is the training data. Therefore, the rate of false wake-ups of the voice apparatus can be reduced in the case where the plurality of wake-up words is recognized simultaneously.

### Third Embodiment

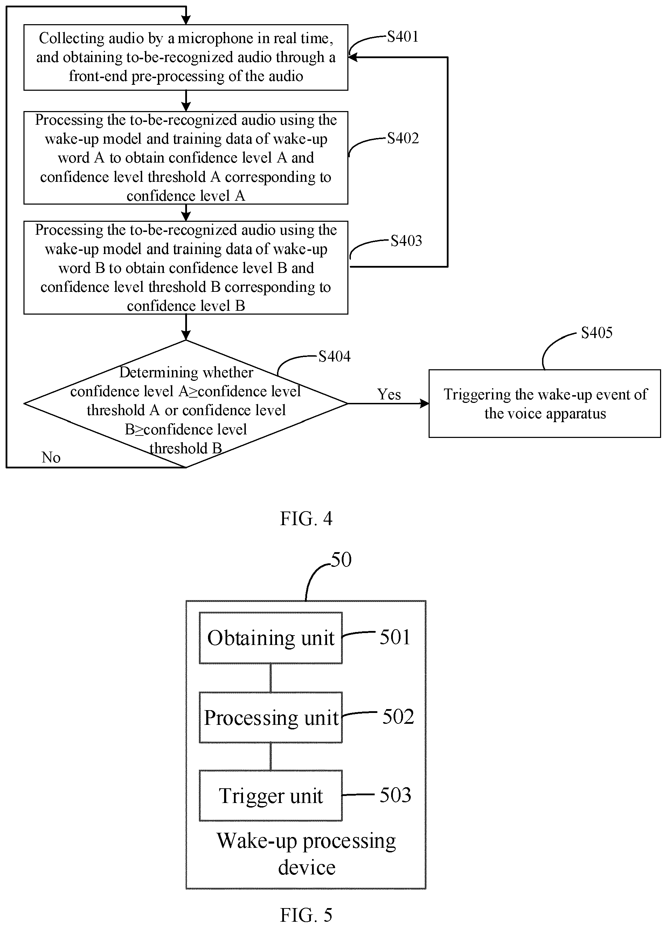

Reference can be made to FIG. 4, which is based on the same concept as the above-mentioned embodiments and illustrates a detailed flowchart illustrating a wake-up processing method according to an embodiment of the present disclosure. As an example, wake-up word A and wake-up word B are available. As illustrated in FIG. 4, the method may include following steps.

At S401, audio is collected by a microphone in real time, and to-be-recognized audio is obtained through a front-end pre-processing of the audio.

At S402, the to-be-recognized audio is processed using the wake-up model and training data of wake-up word A to obtain confidence level A and confidence level threshold A corresponding to confidence level A.

At S403, the to-be-recognized audio is processed using the wake-up model and training data of wake-up word B to obtain confidence level B and confidence level threshold B corresponding to confidence level B.

At S404, whether confidence level A ≥ confidence level threshold A or confidence level B ≥ confidence level threshold B is determined.

At S405, when confidence level A ≥ confidence level threshold A or confidence level B ≥ confidence level threshold B, the wake-up event of the voice apparatus is triggered.

It should be noted that for the operation at S404, when confidence level A ≥ confidence level threshold A or confidence level B ≥ confidence level threshold B, the operation at S405 can be executed. When the voice apparatus is woken up, the method returns to the operation at S401 to continue a next audio collection. Otherwise, the method directly returns to the operation at S401 to continue a next audio collection.

In the embodiments of the present disclosure, one wake-up model is adopted, and different wake-up words are used for training separately to obtain independent training data. Therefore, the separation and non-interference of the training data for the wake-up words are realized.

In a possible embodiment, a relevant process is as follows.
(1) A plurality of wake-up words is designed to use one wake-up model.
(2) The wake-up model is trained using the wake-up word A training set to obtain the training data of wake-up word A.
(3) The wake-up model is trained using the wake-up word B training set to obtain the training data of wake-up word B.
(4) The wake-up model, the training data of wake-up word A, and the training data of wake-up word B are stored in a speech module for wake-up recognition.
(5) Audio is collected by a microphone in real time, and to-be-recognized audio is obtained through a front-end pre-processing of the audio.
(6) The to-be-recognized audio is processed using the wake-up model and the training data of wake-up word A to obtain confidence level A and confidence level threshold A.
(7) The to-be-recognized audio is processed using the wake-up model and the training data of wake-up word B to obtain confidence level B and confidence level threshold B.
(8) When confidence level A ≥ confidence level threshold A or confidence level B ≥ confidence level threshold B, the wake-up event is triggered.

In another possible embodiment, the processing operation of (8) may also be implemented as follows.
(1) When confidence level A ≥ confidence level threshold A and confidence level B < confidence level threshold B, wake-up event A is triggered.
(2) When confidence level A < confidence level threshold A and confidence level B ≥ confidence level threshold B, wake-up event B is triggered.
(3) When confidence level A ≥ confidence level threshold A and confidence level B ≥ confidence level threshold B, the wake-up event is triggered based on a comprehensive judgment made in accordance with a percentage value by which each of confidence level A and confidence level B exceeds their respective confidence level thresholds.

It should also be noted that in the schemes of the related art, different wake-up words are used simultaneously for training, and thus the crosstalk is likely to occur between different wake-up words. That is, under inadequate training, ambiguous tones of wake-up words in the environmental noise is likely to be misjudged, especially when there is a repetition of words (e.g., "Xiaomei Xiaomei" and "Assistant Xiaomei"). Individual wake-up words need to be distinguished from each other relying on model design and a large number of training sets. The problem of crosstalk can be hardly solved due to limitations of hardware storage resources and requirements of a wake-up response speed. In this embodiment, each group of wake-up word training sets is trained individually. Therefore, the possibility of crosstalk between wake-up words is avoided, and the satisfactory recognition result can be achieved with a small training volume.

The wake-up word Xiaomei Xiaomei in Cantonese (xiumei xiumei) and Mandarin (xiaomei xiaomei) is taken as an example. Table 1 shows a comparison of model test data in cases of simultaneous training of the wake-up words and separate training of the wake-up words.

**Table 1**

| Technical solution | Storage Occupancy | Wake-up response time | Quantity of training sets | False wake-ups (measured in real time) |
|---|---|---|---|---|
| Simultaneous training of wake-up words | 1.13 megabytes | Within 0.5 seconds | 20,000 pieces | One false wake-up in 24 hours |
| Separate training of wake-up words | 1.21 megabytes | Within 0.5 seconds | 12,000 pieces | Zero false wake-up in 24 hours |

The above model test data in Table 1 reveals that the solutions according to the embodiments of the present disclosure can achieve a low rate of false wake-ups in a case of simultaneous recognition of several wake-up words. The scheme in the related art is to train with wake-up words simultaneously. The enterprise standards requirement requires false wake-ups in a false wake-up test to be smaller than three times in 24 hours. However, training with wake-up words separately according to the embodiments of the present disclosure allows false wake-ups in the false wake-up test to be smaller than one time in 72 hours. In addition, in the solutions of the embodiments of the present disclosure, when the new wake-up word needs to be added, retraining only needs to be performed on the newly added wake-up word without affecting existing wake-up words owing to data separation. Further, the development efficiency can also be improved.

The embodiment of the present disclosure provides the wake-up processing method. A specific implementation of the preceding embodiments is elaborated in detail through the above-mentioned embodiment. It can be seen that, with the technical solutions according to the above-mentioned embodiments, the possibility of crosstalk that occurs when different wake-up words are trained simultaneously can be avoided. In addition, the separation and non-interference of training data for the wake-up words are realized. Further, the rate of false wake-ups of the voice apparatus can be reduced in the case where the plurality of wake-up words is recognized simultaneously.

### Fourth Embodiment

Reference can be made to FIG. 5, which is based on the same concept as the above-mentioned embodiments and illustrates a schematic diagram showing a composition structure of a wake-up processing device according to an embodiment of the present disclosure. As illustrated in FIG. 5, a wake-up processing device 50 can include an obtaining unit 501, a processing unit 502, and a trigger unit 503.

The obtaining unit 501 is configured to obtain to-be-recognized audio.

The processing unit 502 is configured to process the to-be-recognized audio using a wake-up model and at least two groups of training data separately, to obtain at least two confidence levels and respective confidence level thresholds corresponding to the at least two confidence levels. The at least two groups of training data are obtained by separately training with at least two groups of wake-up word training sets using the wake-up model.

The trigger unit 503 is configured to trigger a wake-up event of the voice apparatus based on a comparison result between the at least two confidence levels and the respective confidence level thresholds corresponding to the at least two confidence levels.

In some embodiments, the obtaining unit 501 is specifically configured to: perform a data collection through a sound collection device to obtain initial voice data; and pre-process the initial voice data to obtain the to-be-recognized audio.

In some embodiments, each of the at least two groups of training data includes a model parameter and a confidence level threshold. Correspondingly, the processing unit 502 is specifically configured to: process the to-be-recognized audio using the wake-up model and the model parameters in the at least two groups of training data separately to obtain the at least two confidence levels, and obtain the respective confidence level thresholds corresponding to the at least two confidence levels from the at least two groups of training data.

In some embodiments, the at least two groups of training data include a first group of training data and a second group of training data. The first group of training data includes a first model parameter and a first confidence level threshold. The second group of training data includes a second model parameter and a second confidence level threshold. Correspondingly, the processing unit 502 is specifically configured to: process the to-be-recognized audio using the wake-up model and the first model parameter in the first group of training data to obtain a first confidence level, and determine the first confidence level threshold corresponding to the first confidence level from the first group of training data; and process the to-be-recognized audio using the wake-up model and the second model parameter in the second group of training data to obtain a second confidence level, and determine the second confidence level threshold corresponding to the second confidence level from the second group of training data.

In some embodiments, the trigger unit 503 is specifically configured to trigger the wake-up event of the voice apparatus when the first confidence level is greater than or equal to the first confidence level threshold or the second confidence level is greater than or equal to the second confidence level threshold.

In some embodiments, the wake-up event includes a first wake-up event and/or a second wake-up event. The first wake-up event has an association relation with a wake-up word corresponding to the first group of training data. The second wake-up event has an association relation with a wake-up word corresponding to the second group of training data.

In some embodiments, the trigger unit 503 is specifically configured to: trigger the first wake-up event of the voice apparatus when the first confidence level is greater than or equal to the first confidence level threshold and the second confidence level is smaller than the second confidence level threshold; or trigger the second wake-up event of the voice apparatus when the second confidence level is greater than or equal to the second confidence level threshold and the first confidence level is smaller than the first confidence level threshold; or calculate, when the first confidence level is greater than or equal to the first confidence level threshold and the second confidence level is greater than or equal to the second confidence level threshold, a first value by which the first confidence level exceeds the first confidence level threshold and a second value by which the second confidence level exceeds the second confidence level threshold, and trigger a target wake-up event of the voice apparatus based on the first value and the second value.

In some embodiments, the trigger unit 503 is further configured to: when the first value is greater than or equal to the second value, determine the target wake-up event as the first wake-up event and triggering the first wake-up event; or when the first value is smaller than the second value, determine the target wake-up event as the second wake-up event and triggering the second wake-up event.

In some embodiments, the obtaining unit 501 is further configured to obtain the at least two groups of wake-up word training sets.

The processing unit 502 is further configured to train the wake-up model using the at least two groups of wake-up word training sets, to obtain the at least two groups of training data. Each of the at least two groups of training data includes a model parameter and a confidence level threshold.

In some embodiments, the obtaining unit 501 is further configured to: obtain an initial training set, in which the initial training set includes at least two wake-up words; and grouping the initial training set based on different wake-up words to obtain the at least two groups of wake-up word training sets.

It can be understood that in the embodiments, a "unit" may be a part of a circuit, a part of a processor, a part of a program or software, etc. In other embodiments of the present disclosure, the "unit" may or may not be a module. In addition, the components in the embodiments may be integrated in one processing unit, or the respective units may be separate physical existence, or two or more units may be integrated in one unit. The above integrated units can be implemented in a form of hardware, or in a form of a functional software module.

When the integrated unit is implemented in the form of a software functional module and sold or used as a standalone product, it can be stored in a computer-readable storage medium. Based on this understanding, all or part of the technical solutions according to the embodiments, or the part thereof that contributes to the related art, can be embodied in the form of a software product. The computer software product may be stored in a storage medium and contain instructions to enable a computer device (which may be a personal computer, a server, or a network device, etc.) or a processor to perform all or part of the steps of the method described in each of the embodiments. The above-mentioned storage medium may include various mediums capable of storing program codes, such as a Universal Serial Bus flash drive, a mobile hard disk, a Read-Only Memory (ROM), a Random Access Memory (RAM), a magnetic disk, or an optical disc.

Therefore, the embodiments provide a computer storage medium. The computer storage medium has a wake-up processing program stored thereon. The wake-up processing program, when executed by at least one processor, implements the steps of the method according to any of the above-mentioned embodiments.

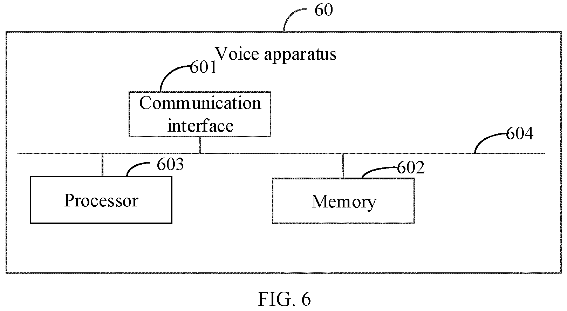

Reference can be made to FIG. 6, which is based on the composition of a wake-up processing apparatus 50 and the computer storage medium and illustrates a schematic diagram showing a specific hardware structure of the wake-up processing apparatus 50 according to an embodiment of the present disclosure. As illustrated in FIG. 6, the voice apparatus may include a communication interface 601, a memory 602, and a processor 603. Various components are coupled together by a bus system 604. It can be appreciated that the bus system 604 is configured to enable connection and communication between these components. In addition to a data bus, the bus system 604 further includes a power bus, a control bus, and a state signal bus. However, for clarity of illustration, various buses are labeled as the bus system 604 in FIG. 6. The communication interface 601 is configured to receive and transmit signals in a process of transceiving information with other external network elements.

The memory 602 is configured to store a computer program executable on the processor 603.

The processor 603 is configured to perform, when executing the computer program: obtaining to-be-recognized audio; processing the to-be-recognized audio using a wake-up model and at least two groups of training data separately, to obtain at least two confidence levels and respective confidence level thresholds corresponding to the at least two confidence levels, in which the at least two groups of training data are obtained by separately training with at least two groups of wake-up word training sets using the wake-up model; and triggering a wake-up event of the voice apparatus based on a comparison result between the at least two confidence levels and the respective confidence level thresholds corresponding to the at least two confidence levels.

It can be appreciated that the memory 602 in the embodiments of the present disclosure may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a RAM, which is used as an external cache. As illustrative, rather than limiting, many forms of RAMs are available, including a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchronous link DRAM (SLDRAM), and a Direct Rambus RAM (DRRAM). The memory 602 used for the system and method described in the present disclosure is intended to include, but not limited to, these and any other suitable types of memories.

The processor 603 may be an integrated circuit chip having a signal processing capability. In an implementation process, steps of the above method embodiments can be completed by an integrated logic circuit of hardware in a processor 603 or instructions in a form of software. The above processor 603 can be a general-purpose processor, a Digital Signal Processor (DSP), an Application Specific Integrated Circuit (ASIC), a Field Programmable Gate Array (FPGA) or other programmable logic components, a discrete gate or a transistor logic component, and a discrete hardware component. The method, steps, and logical block diagrams disclosed according to an embodiment of the present disclosure can be implemented or executed. The general-purpose processor may be a microprocessor, or the processor may also be any conventional processor or the like. Steps of the method disclosed according to an embodiment of the present disclosure may be directly embodied as being executed and completed by a hardware decoding processor, or executed and completed by a combination of hardware and software modules in the decoding processor. A software module can be located in a mature storage medium in the field, such as a RAM, a flash memory, a ROM, a PROM or an electrically erasable programmable memory, and a register. The storage medium is located in the memory 602. The processor 603 is configured to read information in the memory 602, and complete the steps of the above method in combination with hardware thereof.

It can be understood that the embodiments described herein may be implemented by hardware, software, firmware, middleware, microcode, or a combination thereof. For a hardware implementation, a processing unit can be implemented in one or more ASICs, Digital Signal Processors (DSP), DSP Devices (DSPDs), Programmable Logic Devices (PLDs), Field-Programmable Gate Arrays (FPGAs), general-purpose processors, controllers, microcontrollers, microprocessors, other electronic units configured to perform functions described in the present disclosure, or a combination thereof.

For a software implementation, techniques described in the present disclosure may be implemented through modules (e.g., procedures, functions, etc.) configured to perform the functions described herein. Software codes may be stored in the memory and executed by a processor. The memory can be implemented in the processor or external to the processor.

In another exemplary embodiment of the present disclosure, the processor 603 is further configured to perform, when executing the computer program, the steps of the method described in any one of the above-mentioned embodiments.

It should be noted that in the present disclosure, terms "include", "have", and any variations thereof are intended to cover non-exclusive inclusions, such that a process, method, product, or device that includes a series of elements is not necessarily limited to those clearly listed elements, but may also include other elements that are not clearly listed or are inherent to the process, method, product, or device. Without further limitation, an element defined by the phrase "including a ..." does not preclude the presence of additional identical elements in the process, method, product, or device that includes the element.

The above-mentioned sequence numbers of the embodiments of the present application are for description only, and do not represent superiority or inferiority of the embodiments.

The methods disclosed in the several method embodiments provided in the present disclosure can be combined arbitrarily without conflict to obtain a new method embodiment.

The features disclosed in the several product embodiments provided in the present disclosure can be combined arbitrarily without conflict to obtain a new product embodiment.

The features disclosed in the several method or device embodiments provided in the present disclosure can be combined arbitrarily without conflict to obtain a new method embodiment or a new device embodiment.

While the specific embodiments of the present disclosure have been described above, the protect scope of the present disclosure is not limited to these embodiments. Various variants and alternatives can be easily conceived by any of those skilled in the art without departing from the technical scope of the present disclosure. Therefore, these variants and alternatives are to be encompassed by the protect scope of present disclosure as defined by the claims as appended.

## Claims

1. A wake-up processing method, applied in a voice apparatus, the method comprising:
obtaining to-be-recognized audio;
processing the to-be-recognized audio using a wake-up model and at least two groups of training data separately, to obtain at least two confidence levels and respective confidence level thresholds corresponding to the at least two confidence levels, wherein the at least two groups of training data are obtained by separately training with at least two groups of wake-up word training sets using the wake-up model; and
triggering a wake-up event of the voice apparatus based on a comparison result between the at least two confidence levels and the respective confidence level thresholds corresponding to the at least two confidence levels.

2. The method according to claim 1, wherein said obtaining the to-be-recognized audio comprises:
performing a data collection through a sound collection device to obtain initial voice data; and
pre-processing the initial voice data to obtain the to-be-recognized audio.

3. The method according to claim 1, wherein each of the at least two groups of training data comprises a model parameter and a confidence level threshold; and wherein said processing the to-be-recognized audio using the wake-up model and the at least two groups of training data separately, to obtain the at least two confidence levels and the respective confidence level thresholds corresponding to the at least two confidence levels comprises:
processing the to-be-recognized audio using the wake-up model and the model parameters in the at least two groups of training data separately to obtain the at least two confidence levels, and obtaining the respective confidence level thresholds corresponding to the at least two confidence levels from the at least two groups of training data.

4. The method according to any one of claims 1 to 3, wherein the at least two groups of training data comprise a first group of training data and a second group of training data, the first group of training data comprising a first model parameter and a first confidence level threshold, and the second group of training data comprising a second model parameter and a second confidence level threshold; and
wherein said processing the to-be-recognized audio using the wake-up model and the at least two groups of training data separately, to obtain the at least two confidence levels and the respective confidence level thresholds corresponding to the at least two confidence levels comprises:
processing the to-be-recognized audio using the wake-up model and the first model parameter in the first group of training data to obtain a first confidence level, and determining the first confidence level threshold corresponding to the first confidence level from the first group of training data; and
processing the to-be-recognized audio using the wake-up model and the second model parameter in the second group of training data to obtain a second confidence level, and determining the second confidence level threshold corresponding to the second confidence level from the second group of training data.

5. The method according to claim 4, wherein said triggering the wake-up event of the voice apparatus based on the comparison result between the at least two confidence levels and the respective confidence level thresholds corresponding to the at least two confidence levels comprises:
triggering the wake-up event of the voice apparatus when the first confidence level is greater than or equal to the first confidence level threshold or the second confidence level is greater than or equal to the second confidence level threshold.

6. The method according to claim 5, wherein the wake-up event comprises a first wake-up event and/or a second wake-up event, the first wake-up event having an association relation with a wake-up word corresponding to the first group of training data, and the second wake-up event having an association relation with a wake-up word corresponding to the second group of training data.

7. The method according to claim 6, wherein said triggering the wake-up event of the voice apparatus based on the comparison result between the at least two confidence levels and the respective confidence level thresholds corresponding to the at least two confidence levels comprises:
triggering the first wake-up event of the voice apparatus when the first confidence level is greater than or equal to the first confidence level threshold and the second confidence level is smaller than the second confidence level threshold; or
triggering the second wake-up event of the voice apparatus when the second confidence level is greater than or equal to the second confidence level threshold and the first confidence level is smaller than the first confidence level threshold; or
calculating, when the first confidence level is greater than or equal to the first confidence level threshold and the second confidence level is greater than or equal to the second confidence level threshold, a first value by which the first confidence level exceeds the first confidence level threshold and a second value by which the second confidence level exceeds the second confidence level threshold, and triggering a target wake-up event of the voice apparatus based on the first value and the second value.

8. The method according to claim 7, wherein said triggering the target wake-up event of the voice apparatus based on the first value and the second value comprises:
when the first value is greater than or equal to the second value, determining the target wake-up event as the first wake-up event and triggering the first wake-up event; or
when the first value is smaller than the second value, determining the target wake-up event as the second wake-up event and triggering the second wake-up event.

9. The method according to claim 1, further comprising:
obtaining the at least two groups of wake-up word training sets; and
training the wake-up model using the at least two groups of wake-up word training sets, to obtain the at least two groups of training data, wherein each of the at least two groups of training data comprises a model parameter and a confidence level threshold.

10. The method according to claim 9, wherein said obtaining the at least two groups of wake-up word training sets comprises:
obtaining an initial training set, wherein the initial training set comprises at least two wake-up words; and
grouping the initial training set based on different wake-up words to obtain the at least two groups of wake-up word training sets.

11. A wake-up processing device, applied in a voice apparatus, the device comprising an obtaining unit, a processing unit, and a trigger unit, wherein:
the obtaining unit is configured to obtain to-be-recognized audio;
the processing unit is configured to process the to-be-recognized audio using a wake-up model and at least two groups of training data separately, to obtain at least two confidence levels and respective confidence level thresholds corresponding to the at least two confidence levels, wherein the at least two groups of training data are obtained by separately training with at least two groups of wake-up word training sets using the wake-up model; and
the trigger unit is configured to trigger a wake-up event of the voice apparatus based on a comparison result between the at least two confidence levels and the respective confidence level thresholds corresponding to the at least two confidence levels.

12. A voice apparatus, comprising a memory and a processor, wherein:
the memory is configured to store a computer program executable on the processor; and
the processor is configured to perform, when executing the computer program, the method according to any one of claims 1 to 10.

13. A computer storage medium, having a computer program stored thereon, wherein the computer program, when executed by at least one processor, implements the method according to any one of claims 1 to 10.
